(19) Europäisches Patentamt
European Patent Office
Office européen des brevets

(11) **EP 4 664 159 A1**

(12) **EUROPEAN PATENT APPLICATION**
published in accordance with Art. 153(4) EPC

(43) Date of publication:
**17.12.2025 Bulletin 2025/51**

(21) Application number: **23923666.4**

(22) Date of filing: **11.09.2023**

(51) International Patent Classification (IPC):
***G01S 17/931*** (2020.01)

(52) Cooperative Patent Classification (CPC):
**G01D 21/02; G01S 17/58; G01S 17/87;**
**G01S 17/931; G01S 19/14; G06N 3/04; G06N 3/08;**
**G06V 10/74; G06V 10/764; G06V 20/58**

(86) International application number:
**PCT/CN2023/118038**

(87) International publication number:
**WO 2024/174500 (29.08.2024 Gazette 2024/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.02.2023 CN 202310183088**

(71) Applicant: **Huawei Technologies Co., Ltd.**
**Shenzhen, Guangdong 518129 (CN)**

(72) Inventors:
• **HE, Kun**
**Shenzhen, Guangdong 518129 (CN)**
• **HONG, Lanqing**
**Shenzhen, Guangdong 518129 (CN)**
• **YUAN, Peng**
**Shenzhen, Guangdong 518129 (CN)**
• **FENG, Bailan**
**Shenzhen, Guangdong 518129 (CN)**
• **ZHANG, Hongbo**
**Shenzhen, Guangdong 518129 (CN)**
• **LI, Zhenguo**
**Shenzhen, Guangdong 518129 (CN)**
• **MIAO, Lei**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA PROCESSING METHOD, READABLE STORAGE MEDIUM AND ELECTRONIC DEVICE**

(57) This application relates to the field of artificial intelligence technologies, and discloses a data processing method, a readable storage medium, and an electronic device. In the method, a first obstacle detection result obtained by inputting, to a first model, data collected by a first detection apparatus of a vehicle at a first moment and an obstacle detection result generated by the first model based on data collected by the first detection apparatus at another moment, and/or an obstacle detection result generated based on data of a second detection apparatus are matched in a comparison area; and then whether first detection data is hard example data for the first model is determined based on a result of the matching. In the method, there is no need to manually specify a hard example type in advance, and hard example data for the first model is actively mined based on a result of matching between an output result of the first model and another result. In addition, the result of the matching reflects inconsistency between the first obstacle detection result and a second obstacle detection result in terms of timing and space. This helps improve accuracy and efficiency of hard example mining.

FIG. 11

**Description**

This application claims priority to Chinese Patent Application No. 202310183088.4, filed with the China National Intellectual Property Administration on February 22, 2023 and entitled "DATA PROCESSING METHOD, READABLE STORAGE MEDIUM, AND ELECTRONIC DEVICE", which is incorporated herein by reference in its entirety.

**TECHNICAL FIELD**

This application relates to the field of artificial intelligence technologies, and in particular, to a data processing method, a readable storage medium, and an electronic device.

**BACKGROUND**

With development of radar technologies, radars are increasingly widely used in electronic devices. For example, a vehicle is usually equipped with a radar and can use a trained model to infer, based on radar detection data detected by the radar, obstacle information of an environment in which the vehicle is located. Training data on which the model relies in a training process directly affects accuracy of the obstacle information, inferred by using the model, of the environment in which the vehicle is located. To improve accuracy of an inference result of the model, usually iterative training may be performed on the model based on radar detection data based on which the model provides a low-accuracy inference result (the radar detection data is referred to as hard example data below).

Currently, hard example data for the model is usually determined manually, which is inefficient. In addition, the determined hard example data is greatly affected by manual subjectivity. Therefore, how to determine hard example data in radar detection data is an urgent problem to be resolved.

**SUMMARY**

In view of this, embodiments of this application provide a data processing method, a readable storage medium, and an electronic device. A detection result obtained by performing inference on detection data by using a model is compared with another detection result, to determine whether the detection data is hard example data for the model. This helps improve accuracy and efficiency of determining hard example data.

According to a first aspect, this application provides a data processing method. The method includes: inputting, to a first model, first detection data collected by a vehicle at a first moment by using a first detection apparatus, to obtain a first obstacle detection result of the vehicle; and matching the first obstacle detection result with a second obstacle detection result, and determining, based on a result of the matching, whether the first detection data is hard example data for the first model, where when the first detection data is the hard example data for the first model, it indicates that accuracy of the first obstacle detection result does not meet a preset requirement.

In other words, in this application, the first obstacle detection result obtained based on the first detection data by using the first model is matched with another detected obstacle detection result, to determine whether the first detection data is the hard example data for the first model. In this way, no manual intervention is required, and a determining result is not affected by manual subjective experience. This helps improve accuracy and efficiency of determining hard example data.

In a possible implementation of the first aspect, the second obstacle detection result includes a third obstacle detection result generated by the first model based on second detection data collected by the first detection apparatus at a second moment, and/or a fourth obstacle detection result generated based on third detection data collected by a second detection apparatus at a third moment.

In other words, in some implementations, the first obstacle detection result may be matched with a detection result obtained by the first model at another moment based on detection data of the first detection apparatus, and/or a detection result obtained based on detection data, which is at the first moment or another moment, of a detection apparatus other than the first detection apparatus in a manner other than the first model, to determine whether the first detection data is the hard example data for the first model. This helps further improve accuracy of the determining result.

In a possible implementation of the first aspect, determining, based on the result of the matching, whether the first detection data is the hard example data for the first model includes: when a first degree of matching between the first obstacle detection result and the third obstacle detection result and/or a second degree of matching between the first obstacle detection result and the fourth obstacle detection result meet/meets a hard example condition, determining that the first detection data is the hard example data for the first model.

In a possible implementation of the first aspect, the hard example condition includes at least one of the following conditions: at least one first degree of matching is less than a first preset degree of matching; at least one second degree of matching is less than a second preset degree of matching; a weighted sum of the first degree of matching and the second degree of matching is less than a preset weighted degree of matching; a maximum value of the first degree of matching and the second degree of matching is less than a preset maximum degree of matching; or an average value of the first degree of matching and the second degree of matching is less than a preset average degree of matching.

In a possible implementation of the first aspect, the first degree of matching is determined based on obstacle information, located in a comparison area, in the first obstacle detection result and obstacle information, located in the comparison area, in the third obstacle detection result; and the second degree of matching is determined based on the obstacle information, located in the comparison area, in the first obstacle detection result and obstacle information, located in the comparison area, in the fourth obstacle detection result.

In other words, in some implementations, matching may be performed only on obstacle information located in the comparison area, and there is no need to pay attention to obstacle information outside the comparison area. This can prevent the obstacle information outside the comparison area from affecting accuracy of the result of the matching, and help further improve accuracy of determining whether the first detection data is the hard example data.

In a possible implementation of the first aspect, the first obstacle detection result includes three-dimensional contour information of N obstacles, the third obstacle detection result includes three-dimensional contour information of M objects, and the fourth obstacle detection result includes two-dimensional contour information of P obstacles.

In a possible implementation of the first aspect, the first degree of matching is determined based on a degree of matching between three-dimensional contour information of an obstacle, located in the comparison area, in the N obstacles and three-dimensional contour information of an obstacle, located in the comparison area, in the M obstacles; and the second degree of matching is determined based on a degree of difference between a projection of the three-dimensional contour information of the obstacle, located in the comparison area, in the N obstacles onto a plane on which the fourth obstacle detection result is located and two-dimensional contour information of an obstacle, located in the comparison area, in the P obstacles.

In a possible implementation of the first aspect, the comparison area includes an area, formed by a boundary point on a polar axis of each polar angle in a polar coordinate system that uses a coordinate center as a pole, in a top view of the three-dimensional contour information of the N obstacles, and the coordinate center includes one of a center of the vehicle, a center of gravity of the vehicle, or a coordinate center of the first detection apparatus. The boundary point is determined in the following manner: when there is a point of intersection between a polar axis of a first polar angle and a static obstacle in the N obstacles, using the point of intersection as a boundary point on the polar axis of the first polar angle, where the first polar angle is any polar angle in the polar coordinate system; or when there is no point of intersection between a polar axis of a first polar angle and a static obstacle in the N obstacles, using a point of intersection between the polar axis of the first polar angle and a road surface edge or a point of intersection between the polar axis of the first polar angle and a boundary of the top view as a boundary point on the polar axis of the first polar angle.

In a possible implementation of the first aspect, an interval between the first moment and the second moment is less than first preset duration, and an interval between the first moment and the third moment is less than second preset duration.

In other words, in some implementations, the interval between the first moment and the second moment is less than the first preset duration, and the interval between the first moment and the third moment is less than the second preset duration. For example, the first moment and the second moment may be moments at which the first detection apparatus performs two adjacent data collections, and the third moment may be a moment the same as the first moment or the second moment. This can ensure a similarity between environments in which the vehicle is located when the first detection data, the second detection data, and the third detection data are collected, to improve accuracy of the determining result.

In a possible implementation of the first aspect, the first detection apparatus includes a radar of the vehicle, the second detection apparatus includes a camera of the vehicle, and the first model is a radar detection model.

According to a second aspect, this application provides a readable storage medium. The readable storage medium stores instructions. When the instructions are executed by an electronic device, the electronic device is enabled to implement the data processing method provided in the first aspect and any one of the possible implementations of the first aspect.

According to a third aspect, this application provides an electronic device. The electronic device includes: a memory, configured to store instructions; and at least one processor, configured to execute the instructions, to enable the electronic device to implement the data processing method provided in the first aspect and any one of the possible implementations of the first aspect.

## BRIEF DESCRIPTION OF DRAWINGS

FIG. 1 is a diagram in which an autonomous driving function of a vehicle is used for determining hard example data according to some embodiments of this application;

FIG. 2 is a diagram of a process of a data processing method according to some embodiments of this application;
FIG. 3 is a functional block diagram of a vehicle 100 according to some embodiments of this application;
FIG. 4 is a schematic flowchart of a data processing method according to some embodiments of this application;
FIG. 5A is a diagram of an environment in which a vehicle 100 is located at a first moment according to some embodiments of this application;
FIG. 5B is a diagram of a first radar detection result corresponding to obstacle information of an environment in which a vehicle 100 is located at a first moment according to some embodiments of this application;
FIG. 5C is a diagram of a second radar detection result corresponding to obstacle information of an environment in which a vehicle 100 is located at a second moment according to some embodiments of this application;
FIG. 6 is a diagram of a top view of a first radar detection result according to some embodiments of this application;
FIG. 7 is a schematic flowchart of another data processing method according to some embodiments of this application;
FIG. 8 is a diagram of a visual detection result corresponding to obstacle information of an environment in which a vehicle 100 is located at a first moment according to some embodiments of this application;
FIG. 9 is a diagram of a process of determining a second degree of matching according to some embodiments of this application;
FIG. 10 is a schematic flowchart of still another data processing method according to some embodiments of this application; and
FIG. 11 is a schematic flowchart of yet another data processing method according to some embodiments of this application.

## DESCRIPTION OF EMBODIMENTS

Illustrative embodiments of this application include but are not limited to a data processing method, a readable storage medium, and an electronic device.

The following describes technical solutions in this application with reference to accompanying drawings.

To resolve a problem of low efficiency in manually determining hard example data for a model and great impact of manual subjectivity on the determined hard example data, in some embodiments, hard example data may be determined by using an autonomous driving function of a vehicle.

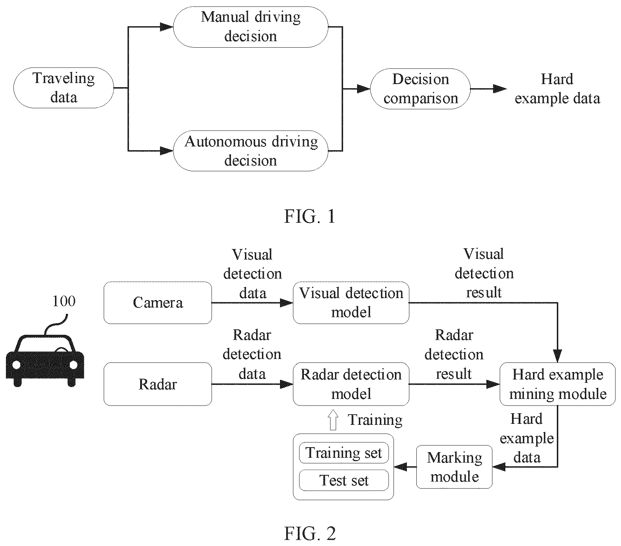

For example, with reference to FIG. 1, in a process in which a driver manually drives a vehicle, the vehicle first infers, by using an autonomous driving function and a radar detection model and based on traveling data of the vehicle, for example, radar detection data detected by a radar of the vehicle, obstacle information of an environment in which the vehicle is located. Then, the vehicle makes an autonomous driving decision (for example, an operation that needs to be performed by the vehicle and that is determined by using the autonomous driving function, such as acceleration, deceleration, braking, or turning) based on the obstacle information of the environment in which the vehicle is located. Finally, the autonomous driving decision is compared with a manual driving decision (for example, an actual operation performed by the driver on the vehicle), and when the autonomous driving decision is different from the manual driving decision, the traveling data of the vehicle (for example, the radar detection data) is determined as hard example data for the radar detection model.

However, because a manual driving decision is greatly affected by experience of the driver and a driving purpose, a manual driving decision is usually not an optimal decision of the vehicle in a specific environment. Consequently, an autonomous driving decision is usually different from a manual driving decision, and good example data (to be specific, data based on which the model infers an accurate result) is likely to be determined as hard example data, resulting in low accuracy of the hard example data.

In view of this, embodiments of this application provide a data processing method, to determine hard example data for a radar detection model. In the data processing method in this application, an obstacle detection result obtained by inputting, to a radar detection model, radar detection data measured by a radar at a first moment in a traveling process of a vehicle is matched with an obstacle detection result obtained by inputting, to the radar detection model, radar detection data of the radar at another moment, and/or an obstacle detection result obtained by inputting, to the radar detection model, a radar detection result measured by the radar at a detection moment is matched with another obstacle detection result (for example, a visual detection result obtained based on visual detection data of a camera of the vehicle). Whether the obstacle detection result obtained by inputting, to the radar detection model, the radar monitoring result at the first moment is hard example data is determined based on a result of the matching.

For example, in the traveling process of the vehicle, the radar detection data of the radar at the first moment may be input to the radar detection model, to determine a radar detection result of an environment in which the vehicle is located at the first moment (obstacle information, obtained based on the radar detection data, of the environment in which the vehicle is located). Then, the following are determined: at least one first degree of matching between the radar detection result of the environment in which the vehicle is located at the first moment and a radar detection result of the vehicle at at least one second moment, and at least one second degree of matching between the radar detection result of the environment in which the vehicle is located at the first moment and a visual detection result at at least one third moment (obstacle information, obtained based on visual detection data shot by the camera, of an environment in which the vehicle is located). Finally, when the first degree of matching and/or the second degree of matching meet/meets a hard example condition, the vehicle determines that the radar detection data of the radar of the vehicle at the first moment is hard example data for the radar detection model.

In other words, when the radar detection data at the first moment is the hard example data for the radar model, it indicates that accuracy of the radar detection result of the environment at the first moment does not meet a preset requirement. For example, the accuracy is lower than preset accuracy.

According to the foregoing method, hard example data is determined based on a first degree of matching between radar detection results corresponding to radar detection data at a plurality of moments and/or a second degree of matching between a radar detection result and a visual detection result at at least one moment, with no need for manual intervention and no impact of a manual subjective factor. This helps improve efficiency of mining hard example data and accuracy of the hard example data.

It may be understood that, in some embodiments, the second moment may be any moment with an interval from the first moment less than preset duration. For example, the second moment may be any moment with an interval from the first moment less than 200 milliseconds. For example, in some implementations, when there is only one second moment, the first moment and the second moment may be moments at which the radar performs two adjacent data collections. In this case, an interval between the first moment and the second moment may be less than 200 milliseconds. In other words, a frequency at which the radar performs data collections is greater than 5 Hz.

It may be understood that the third moment may be any moment with an interval from the first moment less than preset duration. For example, the second moment may be any moment with an interval from the first moment less than 200 milliseconds. For example, in some implementations, when there is only one third moment, the third moment may be the same as the first moment.

It may be understood that, in some embodiments, a radar detection result may be obtained by inputting radar detection data to a pre-trained radar detection model and performing inference by using the radar detection model. For example, the radar detection model may be any model that can obtain obstacle information in radar detection data by performing inference on the radar detection data, for example, a target detection model based on a neural network or deep learning. A type and a form of the radar detection model are not limited herein.

It may be understood that, in some embodiments, the visual detection result may be obtained by inputting visual detection data (for example, an image or a video) to a pre-trained visual detection model and performing inference by using the visual detection model. For example, the visual detection model may be any model that can obtain obstacle information in visual detection data by performing inference on the visual detection data, for example, a target detection model based on a neural network or deep learning. A type and a form of the visual detection model are not limited herein.

It may be understood that, in some embodiments, a value of the first degree of matching increases as a degree of matching between the radar detection result of the vehicle at the first moment and the radar detection result of the vehicle at the second moment increases, and a value of the second degree of matching increases as a degree of matching between the radar detection result of the vehicle at the first moment and the visual detection result of the vehicle at the third moment increases. Based on this, in some embodiments, the hard example condition may include at least one of the following conditions:

at least one first degree of matching is less than a first preset degree of matching;
at least one second degree of matching is less than a second preset degree of matching;
a weighted sum of the first degree of matching and the second degree of matching is less than a preset weighted degree of matching;
a maximum value of the first degree of matching and the second degree of matching is less than a preset maximum degree of matching; or
an average value of the first degree of matching and the second degree of matching is less than a preset average degree of matching.

It may be understood that, in some other embodiments, the hard example condition may include more or fewer conditions. This is not limited herein.

For ease of description, the following describes the technical solutions in this application by using an example in which whether radar detection data at a first moment is hard example data for a radar detection model is determined based on a first degree of matching between a radar detection result at the first moment and a radar detection result of a vehicle at a second moment, and/or a second degree of matching between the radar detection result at the first moment and a visual detection result of an environment in which the vehicle is located at the first moment.

For example, FIG. 2 is a diagram of a process of a data processing method according to some embodiments of this application.

As shown in FIG. 2, in a traveling process, a vehicle 100 may separately obtain, at a first moment and a second moment by using a radar of the vehicle 100, radar detection data of environments in which the vehicle 100 is located, and obtain, at the first moment by using a camera of the vehicle 100, visual detection data of the environment in which the vehicle 100 is located at the first moment. Then, the vehicle 100 inputs the visual detection data and the radar detection data to a visual detection model and a radar detection model respectively, to obtain a visual detection result and radar detection results that correspond to obstacle information of the environments in which the vehicle 100 is located. Finally, the vehicle 100 inputs the visual detection result and the radar detection results to a hard example mining module, and the hard example mining module determines, based on a first degree of matching between the radar detection result at the first moment and the radar detection result of the vehicle at the second moment, and/or a second degree of matching between the radar detection result at the first moment and the visual detection result of the environment in which the vehicle is located at the first moment, that the radar detection data at the first moment is hard example data when the first degree of matching and/or the second degree of matching meet/meets a hard example condition.

If the vehicle 100 determines that the radar detection data at the first moment is the hard example data, a marking module may be used to manually mark obstacle information in first radar detection data, and marked data is added to a training set. In this way, iterative training may be performed on the radar detection model by using the vehicle 100 or another electronic device, to improve accuracy of a radar detection result obtained by the radar detection model based on radar detection data.

For ease of understanding, the following first describes a functional block diagram of the vehicle 100.

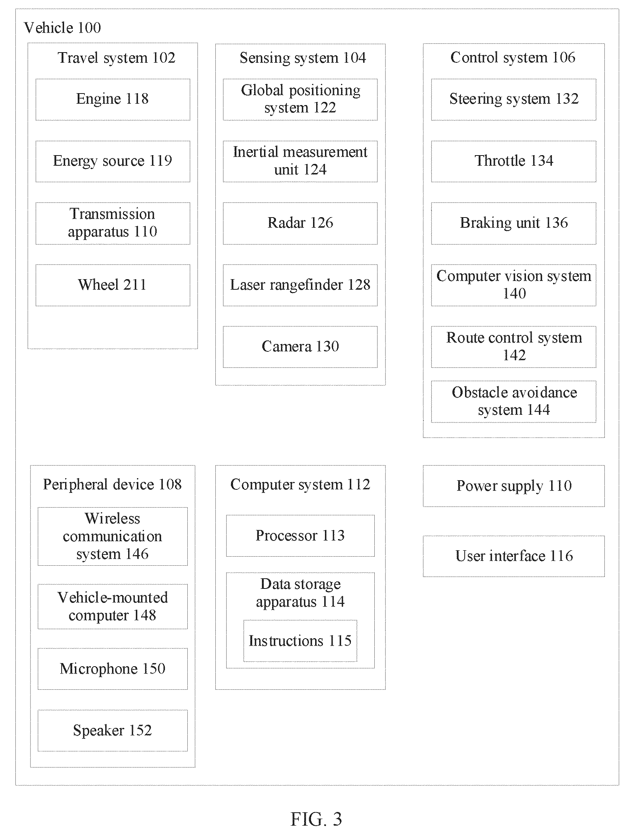

FIG. 3 is a functional block diagram of a vehicle 100 according to some embodiments of this application.

In some embodiments, the vehicle 100 is configured to be in a fully or partially autonomous driving mode (to be specific, an autonomous driving function of the vehicle 100 is used for autonomous driving of the vehicle 100). For example, when the vehicle 100 is configured to be in the partially autonomous driving mode, in the autonomous driving mode, the vehicle 100 may further determine current statuses of the vehicle and an ambient environment of the vehicle through a manual operation, determine possible behavior of at least one of other vehicles in the ambient environment, determine a confidence level corresponding to a possibility that the another vehicle performs the possible behavior, and control the vehicle 100 based on the determined information. When the vehicle 100 is in the autonomous driving mode, the vehicle 100 may be configured to operate without interacting with a person. The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. In addition, each subsystem and element of the vehicle 100 may be interconnected in a wired or wireless manner.

The travel system 102 may include a component that provides power for the vehicle 100 to move. In some embodiments, the travel system 102 may include an engine 118, an energy source 119, a transmission apparatus 120, and a wheel/tire 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may also provide energy for another system of the vehicle 100.

The transmission apparatus 120 may transmit mechanical power from the engine 118 to the wheel 121. The transmission apparatus 120 may include a gearbox, a differential, and a drive shaft. In some embodiments, the transmission apparatus 120 may further include another component, for example, a clutch. The drive shaft may include one or more shafts that may be coupled to one or more wheels 121.

The sensor system 104 may include several sensors that sense information about an ambient environment of the vehicle 100. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an engine oil temperature gauge) in an internal system of the monitored vehicle 100. Sensor data from one or more of these sensors may be used for detecting an object and corresponding characteristics (a position, a shape, a direction, a speed, and the like) of the object. Such detection and identification are key functions of a safe operation of the autonomous vehicle 100.

It may be understood that, in some other embodiments, the sensor system 104 may further include more sensors, for example, an ultrasonic sensor. This is not limited herein.

The positioning system 122 may be configured to estimate a geographical position of the vehicle 100. The IMU 124 is configured to sense a position change and an orientation change of the vehicle 100 based on an inertial acceleration. In some embodiments, the IMU 124 may be a combination of an accelerometer and a gyroscope.

The radar 126 may sense an object in the ambient environment of the vehicle 100 by using a radio signal, to obtain radar detection data of an environment in which the vehicle 100 is located. In some embodiments, in addition to sensing an object, the radar 126 may be further configured to sense a speed and/or a moving direction of the object.

In some embodiments, the radar 126 may be a lidar (laser radar, LiDAR).

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera. In some embodiments, the camera 130 may be configured to obtain visual detection data of an environment in which the vehicle 100 is located, for example, an image or a video of the environment in which the vehicle 100 is located, to determine obstacle information of the environment in which the vehicle is located.

The control system 106 controls operations of the vehicle 100 and components of the vehicle. The control system 106 may include various elements, including a steering system 132, a throttle 134, a braking unit 136, a computer vision system 140, a route control system 142, and an obstacle avoidance system 144.

The steering system 132 may be operated to adjust a moving direction of the vehicle 100. For example, in some embodiments, the steering system may be a steering wheel system.

The throttle 134 is configured to control an operating speed of the engine 118 and further control a speed of the vehicle 100.

The braking unit 136 is configured to control the vehicle 100 to decelerate. The braking unit 136 may use friction to slow down the wheel 121. In another embodiment, the braking unit 136 may convert kinetic energy of the wheel 121 into a current. The braking unit 136 may alternatively reduce a rotational speed of the wheel 121 in another form, to control the speed of the vehicle 100.

The computer vision system 140 may be operated to process and analyze an image captured by the camera 130, to identify an object and/or a feature in the ambient environment of the vehicle 100. The object and/or the feature may include a traffic signal, a road boundary, and an obstacle. The computer vision system 140 may use an object identification algorithm, a structure from motion (structure from motion, SFM) algorithm, video tracking, and another computer vision technology. In some embodiments, the computer vision system 140 may be configured to: draw a map for an environment, track an object, estimate a speed of the object, and the like. For example, in some embodiments, the computer vision system 140 may be configured to obtain, by using a pre-trained visual detection model and based on visual detection data collected by the camera 130, a visual detection result corresponding to obstacle information of an environment in which the vehicle 100 is located.

The route control system 142 is configured to determine a traveling route of the vehicle 100. In some embodiments, the route control system 142 may combine data from the sensor, the positioning system 122, and one or more predetermined maps to determine the traveling route of the vehicle 100.

The obstacle avoidance system 144 is configured to identify, evaluate, and avoid or bypass, in another manner, a potential obstacle in an environment of the vehicle 100.

Certainly, in some examples, the control system 106 may add or alternatively include components in addition to those shown and described. Alternatively, some of the foregoing components may be removed.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for the user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may perform an operation through a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Similarly, the speaker 152 may output audio to the user of the vehicle 100.

The wireless communication system 146 may wirelessly communicate with one or more devices directly or through a communication network. For example, the wireless communication system 146 may use 3G cellular communication, such as code division multiple access (code division multiple access, CDMA), a global system for mobile communications (global system for mobile communications, GSM)/a general packet radio service (general packet radio service, GPRS), or 4G cellular communication, such as LTE, or 5G cellular communication. The wireless communication system 146 may communicate with a wireless local area network (wireless local area network, WLAN) through wireless fidelity (wireless fidelity, Wi-Fi). In some embodiments, the wireless communication system 146 may directly communicate with a device through an infrared link, Bluetooth, or a ZigBee protocol (zigbee). Other wireless protocols such as various vehicle communication systems may be used. For example, the wireless communication system 146 may include one or more dedicated short-range communications (dedicated short-range communications, DSRC) devices, and these devices may include public and/or private data communication between vehicles and/or roadside stations.

The power supply 110 may supply power to various components of the vehicle 100. In some embodiments, the power supply 110 may be a rechargeable lithium-ion or lead-acid battery. One or more battery packs of such a battery may be configured as a power supply to supply power to various components of the vehicle 100. In some embodiments, the power supply 110 and the energy source 119 may be implemented together, for example, in some pure electric vehicles.

Some or all functions of the vehicle 100 are controlled by the computer system 112. The computer system 112 may include at least one processor 113. The processor 113 executes instructions 115 stored in a non-transient computer-readable medium such as a data storage apparatus 114. The computer system 112 may alternatively be a plurality of computing devices that control an individual component or a subsystem of the vehicle 100 in a distributed manner.

The processor 113 may be any conventional processor, such as a commercially available central processing unit (central processing unit, CPU). Alternatively, the processor may be, for example, an application-specific integrated circuit (application-specific integrated circuit, ASIC) or another dedicated device of a hardware-based processor. A person of ordinary skill in the art should understand that the processor, a computer, or a memory may actually include a plurality of processors, computers, or memories that may or may not be stored in a same physical housing. For example, the memory may be a hard disk drive or another storage medium located in a housing different from that of a computer. Therefore, it is understood that a reference to the processor or the computer includes a reference to a set of processors or computers or memories that may or may not operate in parallel. A difference from use of a single processor to perform the steps described herein lies in that some components such as a steering component and a deceleration component may include respective processors, and the processor performs only computation related to a component-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 114 may include the instructions 115 (for example, program logic), and the instructions 115 may be executed by the processor 113 to perform various functions of the vehicle 100, including the functions described above. The data storage apparatus 114 may further include additional instructions, including instructions for sending data to, receiving data from, interacting with, and/or controlling one or more of the travel system 102, the sensor system 104, the control system 106, and the peripheral device 108. For example, in some implementations, the instructions 115 may include an instruction corresponding to the data processing method provided in embodiments of this application, for example, an instruction corresponding to the foregoing hard example mining module. Further, when the processor 113 executes the instructions 115, hard example data may be determined according to the data processing method provided in embodiments of this application.

In addition to the instructions 115, the data storage apparatus 114 may further store data, such as a road map, route information, a position, a direction, a speed, and other vehicle data of the vehicle, and other information. Such information may be used by the vehicle 100 and the computer system 112 when the vehicle 100 operates in an autonomous mode, a semi-autonomous mode, and/or a manual mode. For example, in some implementations, the data storage apparatus 114 may obtain hard example data according to the data processing method provided in embodiments of this application.

The user interface 116 is configured to provide information to or receive information from the user of the vehicle 100. Optionally, the user interface 116 may include one or more input/output devices in a set of the peripheral devices 108, for example, the wireless communication system 146, the vehicle-mounted computer 148, the microphone 150, and the speaker 152.

The computer system 112 may control a function of the vehicle 100 based on inputs received from various subsystems (for example, the travel system 102, the sensor system 104, and the control system 106) and the user interface 116. For example, the computer system 112 may control the steering unit 132 by using an input from the control system 106, to avoid an obstacle detected by the sensor system 104 and the obstacle avoidance system 144. In some embodiments, the computer system 112 may be operated to provide control over many aspects of the vehicle 100 and the subsystems of the vehicle.

Optionally, one or more of the foregoing components may be separately installed from or associated with the vehicle 100. For example, the data storage apparatus 114 may be partially or completely separated from the vehicle 100. The foregoing components may be communicatively coupled together in a wired and/or wireless manner.

Optionally, the foregoing components are merely examples. In an actual application, components in the foregoing modules may be added or deleted according to an actual requirement. FIG. 3 shall not be understood as a limitation on embodiments of this application.

An autonomous driving vehicle traveling on a road, such as the vehicle 100, may identify an object in an ambient environment of the vehicle to determine adjustment of a current speed of the vehicle. The object may be another vehicle, a traffic control device, a pedestrian, a road sign, or another type of object. In some examples, the autonomous driving vehicle may separately consider each identified obstacle, and determine an adjusted speed of the vehicle based on characteristics of each obstacle, such as a current speed and an acceleration of the obstacle, and a distance from the vehicle.

Optionally, the vehicle 100 or a computing device (for example, the computer system 112, the computer vision system 140, or the data storage apparatus 114 in FIG. 3) associated with the vehicle 100 may predict behavior of the identified object based on the characteristics of the identified object and a status of the ambient environment (for example, traffic, rain, and ice on the road). Optionally, identified obstacles depend on behavior of each other. Therefore, all the identified obstacles may be considered together to predict behavior of a single identified obstacle. The vehicle 100 can adjust a speed of the vehicle based on the predicted behavior of the identified object. In other words, the autonomous driving vehicle can determine, based on the predicted behavior of the obstacle, a specific state to which the vehicle needs to be adjusted (for example, acceleration, deceleration, or a stop). In this process, another factor may be further considered to determine a speed of the vehicle 100, for example, a lateral position of the vehicle 100 on the road on which the vehicle travels, a curvature of the road, and proximity between a static object and a dynamic object.

In addition to providing an instruction for adjusting a speed of the autonomous driving vehicle, the computing device may further provide an instruction for modifying a steering angle of the vehicle 100, so that the autonomous driving vehicle follows a given trajectory and/or maintains safe lateral and longitudinal distances from an obstacle (for example, a vehicle in a neighboring lane on the road) near the autonomous driving vehicle.

The vehicle 100 may be a car, a truck, a motorcycle, a bus, a boat, an airplane, a helicopter, a lawn mower, an entertainment vehicle, a playground vehicle, a construction device, a tram, a golf cart, a train, a handcart, or the like. This is not particularly limited in embodiments of the present invention.

The following describes the technical solutions in this application with reference to the structure of the vehicle 100 shown in FIG. 3.

First, a technical solution in which the vehicle 100 determines hard example data based on a first degree of matching between a radar detection result at a first moment and a radar detection result at a second moment is described.

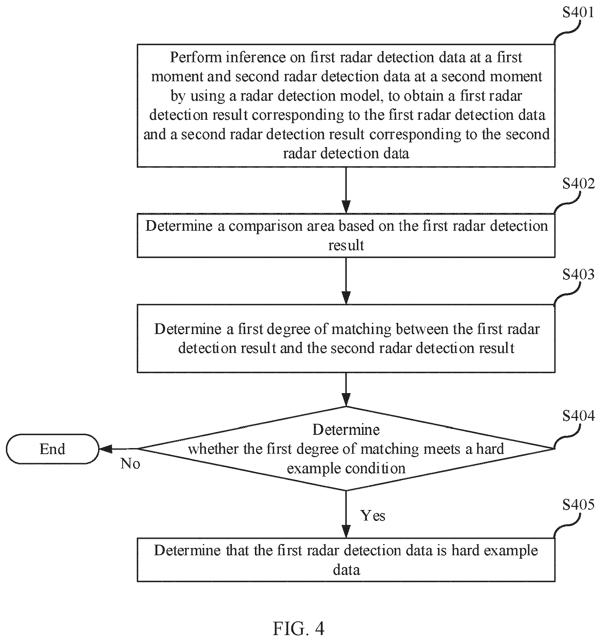

Specifically, FIG. 4 is a schematic flowchart of a data processing method according to some embodiments of this application. The procedure may be performed by any computing unit in the vehicle 100, for example, the processor 113. As shown in FIG. 4, the procedure includes the following steps.

S401: Perform inference on first radar detection data at a first moment and second radar detection data at a second moment by using a radar detection model, to obtain a first radar detection result corresponding to the first radar detection data and a second radar detection result corresponding to the second radar detection data.

In a traveling process, the vehicle 100 may respectively obtain, at the first moment and the second moment, the first radar detection data and the second radar detection data that are detected by the radar 126, then separately input the first radar detection data and the second radar detection data to the radar detection model, and perform inference by using the radar detection model, to obtain the first radar detection result corresponding to obstacle information of an environment in which the vehicle 100 is located at the first moment and the second radar detection result corresponding to obstacle information of an environment in which the vehicle 100 is located at the second moment.

It may be understood that, in some embodiments, the first radar detection data or the second radar detection data may include object distribution (for example, a size, a position, and a type of an object) and an object motion status (a motion direction, a speed, an acceleration, and the like) that are in an environment in which the vehicle 100 is located and that are obtained by the vehicle 100 by using the radar 126.

It may be understood that, in some embodiments, the first radar detection result or the second radar detection result may include a three-dimensional contour of an object (for example, a real three-dimensional contour of the object or a polyhedron including the object) in an environment in which the vehicle 100 is located, position information, a type of the object (a static obstacle, a dynamic obstacle, a road, or the like), and the like.

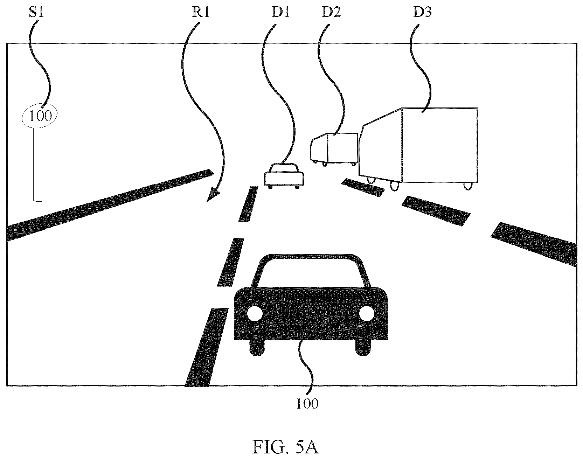

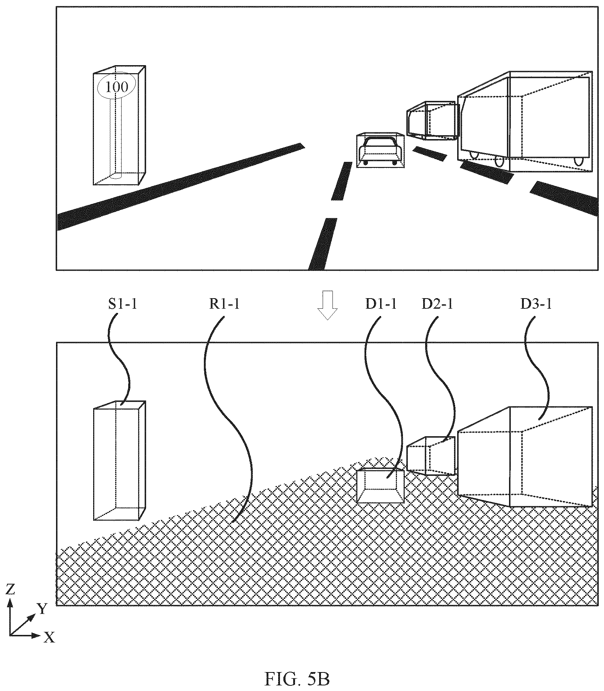

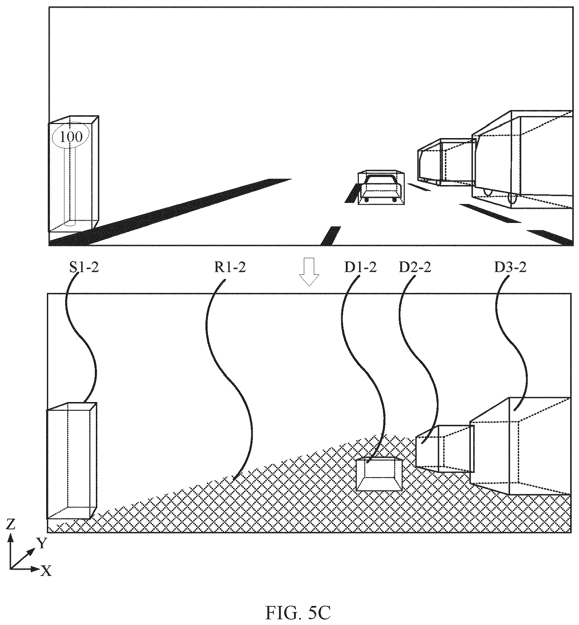

For example, FIG. 5A is a diagram of an environment in which a vehicle 100 is located at a first moment according to some embodiments of this application; FIG. 5B is a diagram of a first radar detection result corresponding to obstacle information of an environment in which a vehicle 100 is located at a first moment according to some embodiments of this application; and FIG. 5C is a diagram of a second radar detection result corresponding to obstacle information of an environment in which a vehicle 100 is located at a second moment according to some embodiments of this application.

Refer to FIG. 5A. The vehicle 100 travels on a road R1 at the first moment, a vehicle D1 is in front of the vehicle 100 in a lane in which the vehicle 100 is located, a vehicle D2 and a vehicle D3 are in a lane on a right side of the vehicle 100, and a road sign S1 is on a left side of the road R1. After obtaining the first radar detection data, the vehicle 100 inputs the first radar detection data to the radar detection model, to obtain the first radar detection result shown in FIG. 5B.

Refer to FIG. 5B. The first radar detection result includes a cuboid S1-2 representing a three-dimensional contour of the road sign S1, a cuboid D1-1 representing a three-dimensional contour of the vehicle D1, a cuboid D2-1 representing a three-dimensional contour of the vehicle D2, and a cuboid D3-1 representing a three-dimensional contour of the vehicle D3.

It may be understood that, in some embodiments, the first radar detection result may further include a plane corresponding to the road R1, for example, R1-1 shown in FIG. 5B.

Refer to FIG. 5C. The second radar detection result includes a cuboid S1-2 representing a three-dimensional contour of the road sign S1, a cuboid D1-2 representing a three-dimensional contour of the vehicle D1, a cuboid D2-2 representing a three-dimensional contour of the vehicle D2, and a cuboid D3-2 representing a three-dimensional contour of the vehicle D3.

It may be understood that, in some embodiments, the second radar detection result may further include a plane corresponding to the road R1, for example, R1-2 shown in FIG. 5C.

It may be understood that, in the radar detection results shown in FIG. 5B and FIG. 5C, a cuboid representing a three-dimensional contour of an obstacle is merely an example. In some other embodiments, the three-dimensional contour of the obstacle in the radar detection results may alternatively be represented in another form, for example, a real three-dimensional contour of the obstacle or another polyhedron. This is not limited herein.

It may be understood that, in some embodiments, the first moment and the second moment may be moments at which the radar 126 performs two adjacent data collections. For example, in some implementations, an interval between the first moment and the second moment may be less than 200 milliseconds. In other words, a frequency at which the radar performs data collections is greater than 5 Hz.

S402: Determine a comparison area based on the first radar detection result.

The vehicle 100 determines the comparison area based on the first radar detection result. The comparison area indicates an area in which an obstacle in the first radar detection result is compared with an obstacle in the second radar detection result.

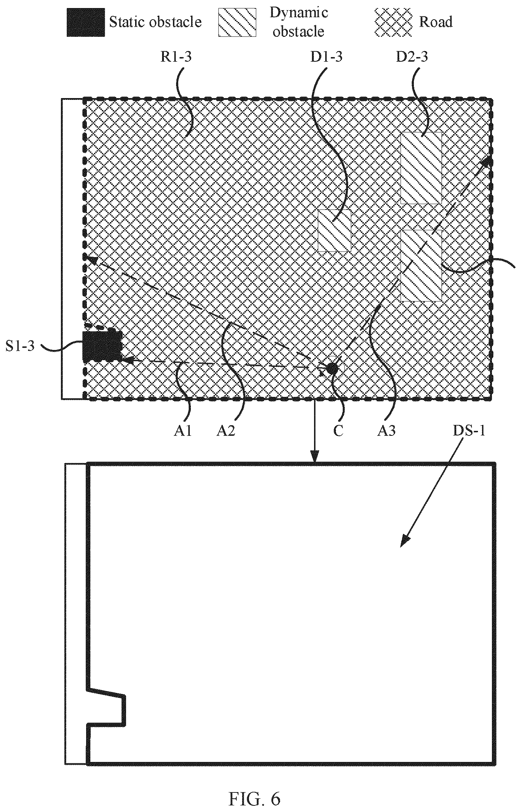

For example, in some embodiments, the comparison area may be determined based on a top view of the first radar detection result, and a top-view direction may be an aspect perpendicular to a plane on which the vehicle 100 is located and pointing to the plane. For example, with reference to FIG. 5B, it is assumed that the plane on which the vehicle 100 is located (for example, a plane on which the road R1 is located) is an X-Y plane, a direction in which a head of the vehicle 100 points is a Y direction, a direction perpendicular to the direction of the head of the vehicle in the X-Y plane is a Y direction, a direction perpendicular to the X-Y plane and pointing upward is a Z direction, and a side top-view direction is a direction pointing to the X-Y plane from the Z direction. Further, refer to FIG. 6. The top view of the first radar detection result includes a rectangle D1-3 corresponding to the vehicle D1, a rectangle D2-3 corresponding to the vehicle D2, a rectangle D3-3 corresponding to the vehicle D3, a rectangle S1-3 corresponding to the road sign S1, and a road area R1-3.

In some embodiments, obstacles in the top view of the first radar detection result may be classified into a static obstacle (to be specific, an obstacle that does not move relative to the ground, for example, a road sign, a road, or a building) and a dynamic obstacle (to be specific, an obstacle that moves relative to the ground, for example, a pedestrian or a vehicle). Then, the vehicle 100 (for example, a geometric center or a center of gravity of the vehicle 100, or a coordinate center of the radar 126) is used as a center, and rays are emitted at various angles (360°) around the top view of the first radar detection result. If there is a static obstacle other than the road at a specific angle, a position at which the angle first encounters the static obstacle other than the road is used as a boundary point corresponding to the comparison area at the angle. If there is no static obstacle other than the road at a specific angle, a position at which a ray at the angle first encounters a road edge or an edge of the top view of the first radar detection result is used as a boundary point corresponding to the comparison area at the angle. Finally, boundary points of the comparison area at the angles are sequentially connected according to the angles, to obtain the comparison area.

For example, with reference to FIG. 6, a center of the radar 126 in the top view of the first radar detection result is a point C, and rays may be emitted at various angles around with the point C as a center. There is a point of intersection A1-1 between a ray corresponding to an angle A1 and the rectangle S1-4 corresponding to the road sign, and in this case, the point A1-1 is used as a boundary point of the comparison area at the angle A1. There is no static obstacle other than the road in a direction of an angle A2, a ray corresponding to the angle A2 first has a point of intersection A2-1 with an edge of the rectangle R1-3 corresponding to the road R1, and in this case, the point of intersection A2-1 is used as a boundary red box of the comparison area at the angle A2. There is no static obstacle other than the road in a direction of an angle A3, there is a point of intersection A3-1 between a ray corresponding to the angle A2 and an edge of the top view of the first radar detection result, and in this case, the point of intersection A3-1 is used as a boundary point of the comparison area at the angle A3. Further, boundary points of the comparison area at the angles are sequentially connected according to the angles, to obtain the comparison area DS-1.

It may be understood that, in some other embodiments, the comparison area may alternatively be determined based on the second radar detection result. This is not limited herein.

It may be understood that, in some other embodiments, the comparison area may alternatively be determined in another manner. This is not limited herein.

It may be understood that, in some embodiments, a polar coordinate system that uses the vehicle 100 (for example, the geometric center or the center of gravity of the vehicle 100, or the coordinate center of the radar 126) as a center in the top view of the first radar detection result may be established, and an area formed by a boundary point on a polar axis of each polar angle in the polar coordinate system is used as the comparison area. The boundary point on the polar axis of each polar angle may be determined in the following manner: When there is a point of intersection between a polar axis of a specific polar angle and a static obstacle in N obstacles, the point of intersection is used as a boundary point on the polar axis of the polar angle; or when there is no point of intersection between a polar axis of a specific polar angle and a static obstacle in N obstacles, a point of intersection between the polar axis of the polar angle and a road surface edge or a point of intersection between the polar axis of the polar angle and a boundary of the top view of the first radar detection result is used as a boundary point on the polar axis of the first polar angle.

S403: Determine a first degree of matching between the first radar detection result and the second radar detection result.

The vehicle 100 determines the first degree of matching between the first radar detection result and the second radar detection result. For example, in some embodiments, the first degree of matching may be determined based on a degree of matching between an obstacle, located in the comparison area, in the first radar detection result and an obstacle, located in the comparison area, in the second radar detection result.

It may be understood that, in some embodiments, the first degree of matching may be determined by using an algorithm such as maximum weight matching in a bipartite graph (Kuhn-Munkres, the KM algorithm) or a Hungarian algorithm (Hungary). The following uses the KM algorithm as an example to describe a manner of determining the first degree of matching.

It is assumed that the first radar detection result includes N obstacles, and an $n^{th}$ obstacle may be represented by a set $O1_n=(P_n, S_n, R_n)$, where $P_n=(X_n, y_n, z_n)$ represents coordinates of a three-dimensional center of the $n^{th}$ obstacle in a coordinate system X-Y-Z, $S_n=(l_n, w_n, h_n)$ represents a three-dimensional size of the $n^{th}$ obstacle (l represents a length, w represents a width, and h represents a height), and $R_n$ represents an angle $R_n$ of an orientation of the $n^{th}$ obstacle. Similarly, it is assumed that the second radar detection result includes M obstacles, and an $m^{th}$ obstacle may be represented by a set $O2_m=(P_m, S_m, R_m)$, where $P_m=(x_m, y_m, z_m)$ represents coordinates of a three-dimensional center of the $m^{th}$ obstacle in a coordinate system X-Y-Z, $S_m=(l_m, w_m, h_m)$ represents a three-dimensional size of the $m^{th}$ obstacle (l represents a length, w represents a width, and h represents a height), and $R_m$ represents an angle $R_m$ of an orientation of the $m^{th}$ obstacle. M may be the same as or different from N.

If the $n^{th}$ obstacle in the first radar detection result is matched with the $m^{th}$ obstacle in the second radar detection result, a similarity $W(O1_n, O2_m)$ between the $n^{th}$ obstacle in the first radar detection result and the $m^{th}$ obstacle in the second radar detection result may be represented by Formula (1):

$$W(O1_n, O2_m)=W1(O1_n, O2_m)\times p+W2(O1_n, O2_m)\times q+W3(O1_n, O2_m)\times r \qquad (1)$$

In Formula (1), $W1(O1_n, O2_m)$ represents a degree of matching in positions and postures of the $n^{th}$ obstacle in the first radar detection result and the $m^{th}$ obstacle in the second radar detection result; $W2(O1_n, O2_m)$ represents a degree of matching in sizes of the $n^{th}$ obstacle in the first radar detection result and the $m^{th}$ obstacle in the second radar detection result; $W3(O1_n, O2_m)$ represents a degree of matching in orientations of the $n^{th}$ obstacle in the first radar detection result and the $m^{th}$ obstacle in the second radar detection result; and p, q and r respectively represent degrees of contribution of the degree of matching in positions and postures, the degree of matching in sizes, and the degree of matching in orientations to the similarity $W(O1_n, O2_m)$ between the $n^{th}$ obstacle in the first radar detection result and the $m^{th}$ obstacle in the second radar detection result, and a larger value indicates a higher degree of contribution.

It may be understood that p, q, and r may be any experimental values or empirical values. This is not limited herein. For example, in some embodiments, p may be 1, q may be 0.5, and r may be 0.5.

For example, in some embodiments, $W1(O1_n, O2_m)$ may be determined according to Formula (2):

$$W1(O1_n, O2_m)=(1-max(|x_n-x_m|, |y_n-y_m|/a)\times diret\_c \qquad (2)$$

In Formula (2), $max(|x_n x-x_m|, |y_n-y_m|/a)$ represents a maximum value of $[x_n-x_m|$ and $|y_n-y_m|/a$, a is an empirical value or an experimental value (for example, a may be 6), direc_c represents a difference between traveling directions of the vehicle 100 at the first moment and the second moment, and |.| represents an absolute value. In some embodiments, direc_c may be represented as $|tan(R1)-(y_m-y_n)/x_m-x_n|$, and tan(R1) represents a tangent value of R1.

For example, in some embodiments, $W2(O1_n, O2_m)$ may be determined according to Formula (3):

$$W2(O1_n, O2_m)=1-(|l_n-l_m|/l_n+|w_n-w_m|/w_n+|h_n-h_m|/h_n) \qquad (3)$$

For example, in some embodiments, $W3(O1_n, O2_m)$ is 0 when a difference ($|R_n-R_m|$) between $R_n$ and $R_m$ is greater than a preset orientation difference; otherwise, $W3(O1_n, O2_m)$ is 1.

It may be understood that, in some other embodiments, $W1(O1_n, O2_m)$, $W2(O1_n, O2_m)$, and $W3(O1_n, O2_m)$ may be determined in another manner. This is not limited herein.

Further, the degree of matching (namely, the first degree of matching) SU1 between the first radar detection result and the second radar detection result may be represented by Formula (4):

$$SU1=W_1+W_2+...+W_N \tag{4}$$

$W_n$ represents a similarity between an $n^{th}$ obstacle in the first radar detection result and an obstacle, matched with the $n^{th}$ obstacle in the first radar detection result, in the second radar detection result.

It may be understood that, in some embodiments, the plane corresponding to the road in the first radar detection result may not be used as an obstacle for determining the first degree of matching.

It may be understood that, if there is no obstacle matched with a $k^{th}$ obstacle in the first radar detection result in the second radar detection result, $W_k=0$.

It may be understood that, in some embodiments, the comparison area may not be determined, and the first degree of matching is determined by matching all obstacles in the first radar detection result with all obstacles in the second radar result. This is not limited herein.

It may be understood that, in some other embodiments, the first degree of matching between the first radar detection result and the second radar detection result may alternatively be determined in another manner. This is not limited herein.

S404: Determine whether the first degree of matching meets a hard example condition.

After determining the first degree of matching between the first radar detection result and the second radar detection result, the vehicle 100 determines whether the first degree of matching meets the hard example condition. If it is determined that the first degree of matching meets the hard example condition, it indicates that the first radar detection data is hard example data for the radar detection model, and step S405 is performed; otherwise, determining on the first radar detection data is ended.

It may be understood that the hard example condition may include that the first degree of matching is less than a first preset degree of matching. In some other embodiments, the hard example condition may further include another condition. This is not limited herein.

S405: Determine that the first radar detection data is hard example data.

When determining that the first degree of matching meets the hard example condition, the vehicle 100 determines that the first radar detection data is the hard example data for the radar detection model.

It may be understood that, in some embodiments, after it is determined that the first radar detection data is the hard example data for the radar detection model, an obstacle in the first radar detection data may be manually marked, and marked data is added to a training set of the radar detection model, to perform iterative training on the radar detection model, to improve accuracy of a radar detection result obtained by the vehicle 100 by using the radar detection model.

According to the foregoing method, hard example data is determined based on a first degree of matching between radar detection results corresponding to radar detection data at different moments, with no need for manual intervention and no impact of a manual subjective factor. This helps improve efficiency of mining hard example data and accuracy of the mined hard example data.

It may be understood that, in some other embodiments, alternatively, the vehicle 100 may not perform step S401 to step S405, and another electronic device implements step S401 to step S405 based on radar detection data collected by the radar 126 of the vehicle 100. This is not limited herein.

The following describes a technical solution in which the vehicle 100 determines hard example data for a radar detection model based on a second degree of matching between a radar detection result at a first moment and a visual detection result at the first moment.

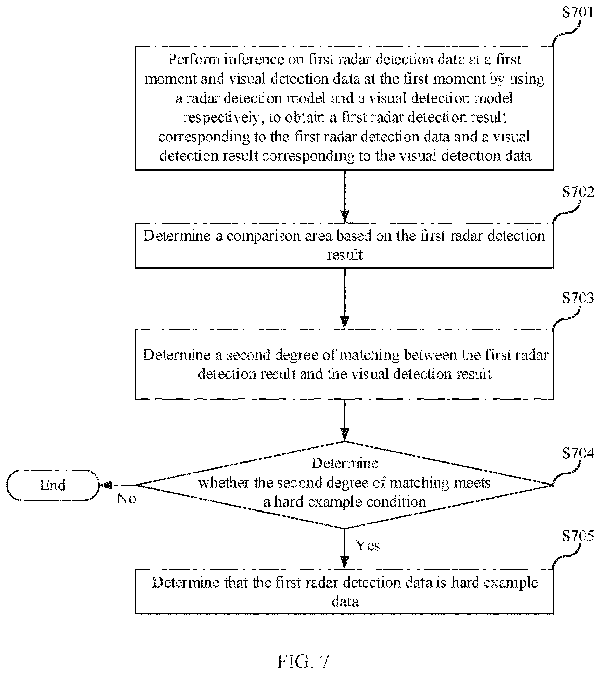

Specifically, FIG. 7 is a schematic flowchart of another data processing method according to some embodiments of this application. The procedure may be performed by any computing unit in the vehicle 100, for example, the processor 113. As shown in FIG. 7, the procedure includes the following steps.

S701: Perform inference on first radar detection data at a first moment and visual detection data at the first moment by using a radar detection model and a visual detection model respectively, to obtain a first radar detection result corresponding to the first radar detection data and a visual detection result corresponding to the visual detection data.

In a traveling process, the vehicle 100 may obtain, at the first moment, the first radar detection data detected by the radar 126 and the visual detection data detected by the camera 130, then input the first radar detection data to the radar detection model and the visual detection model, perform inference by using the radar detection model, to obtain the first radar detection result corresponding to obstacle information of an environment in which the vehicle 100 is located at the first moment, and perform inference by using the visual detection model, to obtain the visual detection result corresponding to the obstacle information of the environment in which the vehicle 100 is located at the first moment.

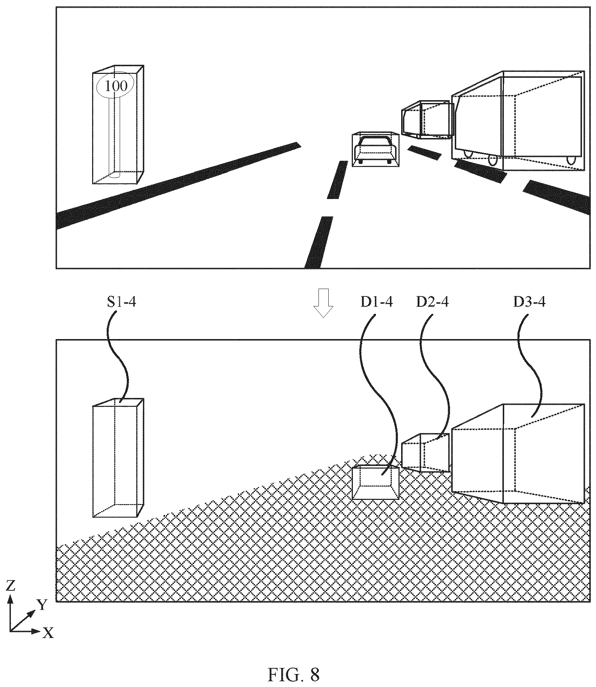

For example, for the first moment shown in FIG. 5, with reference to FIG. 5B, the first radar detection result includes the three-dimensional contour of the road sign S1 represented by the cuboid S1-2, the three-dimensional contour of the vehicle D1 represented by the cuboid D1-1, the three-dimensional contour of the vehicle D2 represented by the cuboid D2-1, and the three-dimensional contour of the vehicle D3 represented by the cuboid D3-1. Refer to FIG. 8. The visual detection result corresponding to the obstacle information of the environment in which the vehicle 100 is located at the first moment may include a rectangle S1-4 representing a two-dimensional contour of the road sign S1, a rectangle D1-4 representing a two-dimensional contour of the vehicle D1, a rectangle D2-4 representing a two-dimensional contour of the vehicle D2, and a rectangle D3-4 representing a two-dimensional contour of the vehicle D3.

It may be understood that, in FIG. 8, a rectangle representing a two-dimensional contour of an obstacle in the visual detection result is merely an example. In some other embodiments, the two-dimensional contour of the obstacle in the visual detection result may alternatively be represented in another form. This is not limited herein.

It may be understood that, in some embodiments, the visual detection result may alternatively be obtained by the computer vision system 140 of the vehicle 100 based on visual detection data. This is not limited herein.

S702: Determine a comparison area based on the first radar detection result.

The vehicle 100 determines the comparison area based on the first radar detection result. The comparison area indicates an area in which an obstacle in the first radar detection result is compared with an obstacle in the visual detection result. For a specific determining manner, refer to step S402. This is not limited herein.

S703: Determine a second degree of matching between the first radar detection result and the visual detection result.

The vehicle 10 determines the second degree of matching between the first radar detection result and the visual detection result.

For example, in some embodiments, the vehicle 100 may determine the second degree of matching based on a degree of difference between point cloud distribution of a projection, in the visual detection result, of an obstacle, located in the comparison area, in the first radar detection result (briefly referred to as projection point cloud distribution below) and point cloud distribution of an obstacle, located in the comparison area, in the visual detection result (briefly referred to as two-dimensional point cloud distribution below). For example, the vehicle 100 may project three-dimensional information of each obstacle in the first radar detection result onto a plane on which the visual detection result is located, to obtain the projection point cloud distribution; and then determine the second degree of matching based on the degree of difference between the projection point cloud distribution and the point cloud distribution of the obstacle, located in the comparison area, in the visual detection result.

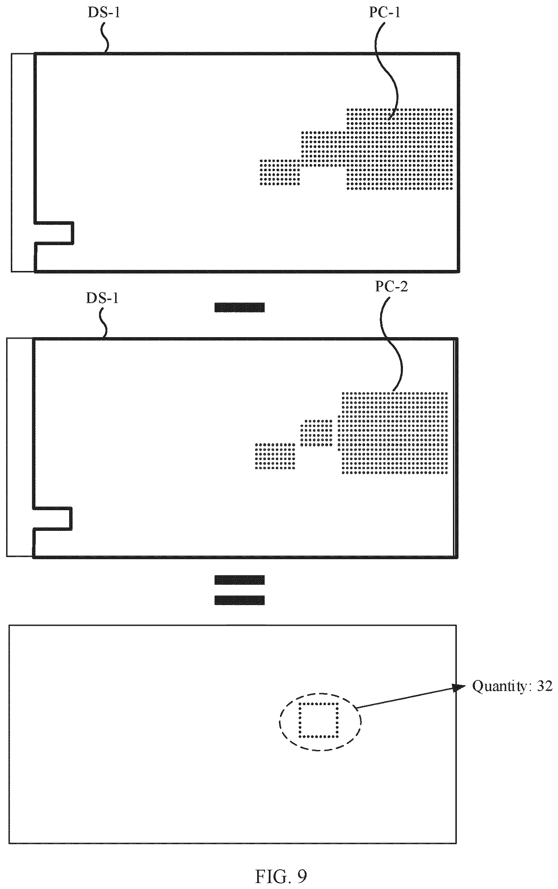

Specifically, with reference to FIG. 9, points included in the rectangle S1-4, the rectangle D1-4, the rectangle D1-4, and the rectangle D1-4, located in the comparison area DS-1, in the visual detection result shown in FIG. 8 correspond to two-dimensional point cloud distribution PC-1, and points included in projections of the cuboid S1-2, the cuboid D1-1, the cuboid D2-1, and the cuboid D3-1 in the first radar detection result shown in FIG. 5B onto the plane on which the visual detection result is located correspond to projection point cloud distribution PC-2. Therefore, a degree of difference between the projection point cloud distribution PC-2 and the two-dimensional point cloud distribution PC-1 may be indicated by a quantity of points that exist in the two-dimensional point cloud distribution PC-1 but do not exist in the projection point cloud distribution PC-2, and the degree of difference increases as the quantity of points increases. For example, the second degree of matching is represented as $c/N$, where $N$ is the quantity of points that exist in the two-dimensional point cloud distribution PC-1 but do not exist in the projection point cloud distribution PC-2, and $c$ is any value greater than 0. Further, the vehicle 10 may determine the second degree of matching based on the degree of difference between the projection point cloud distribution PC-2 and the two-dimensional point cloud distribution PC-1. The second degree of matching decreases as the degree of difference between the projection point cloud distribution PC-2 and the two-dimensional point cloud distribution PC-1 increases. For example, in FIG. 9, the quantity of points that exist in the two-dimensional point cloud distribution PC-1 but do not exist in the projection point cloud distribution PC-2 is 32, and in this case, the second degree of matching may be represented as $c/32$.

It may be understood that, in some embodiments, if the projection point cloud distribution PC-2 is completely matched with the two-dimensional point cloud distribution PC-1, that is, all points in the two-dimensional point cloud distribution PC-1 are in the projection point cloud distribution PC-2, that is, $N=0$, the second degree of matching may be a preset maximum value.

It may be understood that, in some embodiments, the vehicle 100 may project, based on a transformation relationship between a coordinate system of the radar 126 and a coordinate system of the camera 130, the obstacle, located in the comparison area, in the first radar detection result onto the visual detection result. For example, it is assumed that the transformation relationship between the coordinate system of the radar 126 and the coordinate system of the camera 130 may be represented by a transformation matrix of coordinates (transformation matrix of coordinates) M between the coordinate system of the radar 126 and the coordinate system of the camera 130. In this case, for any point P in the first radar detection result, coordinates of P may be multiplied by the transformation matrix of coordinates M to obtain a projected red box P', of the point P, in the visual detection result (to be specific, the coordinate system of the camera 130), to obtain the projection point cloud distribution.

It may be understood that, in some embodiments, the comparison area may not be determined, and the second degree of matching is determined based on a degree of difference between projection point cloud distribution, in the visual detection result, corresponding to all obstacles in the first radar detection result and two-dimensional point cloud distribution corresponding to the visual detection result. This is not limited herein.

It may be understood that, in some other embodiments, the second degree of matching may alternatively be determined in another manner. This is not limited herein.

S704: Determine whether the second degree of matching meets a hard example condition.

After determining the second degree of matching between the first radar detection result and the visual detection result, the vehicle 100 determines whether the first degree of matching meets the hard example condition. If it is determined that the second degree of matching meets the hard example condition, it indicates that the first radar detection data is hard example data for the radar detection model, and step S705 is performed; otherwise, determining on the first radar detection data is ended.

It may be understood that the hard example condition may include that the second degree of matching is less than a second preset degree of matching. In some other embodiments, the hard example condition may further include another condition. This is not limited herein.

S705: Determine that the first radar detection data is hard example data.

When determining that the second degree of matching meets the hard example condition, the vehicle 100 determines that the first radar detection data is the hard example data for the radar detection model.

It may be understood that, in some embodiments, after it is determined that the first radar detection data is the hard example data for the radar detection model, an obstacle in the first radar detection data may be manually marked, and marked data is added to a training set of the radar detection model, to perform iterative training on the radar detection model, to improve accuracy of a radar detection result obtained by the vehicle 100 performing inference by using the radar detection model.

According to the foregoing method, hard example data for the radar detection model is determined based on a second degree of matching between a radar detection result corresponding to radar detection data at a specific moment and a visual detection result corresponding to visual detection data at the moment, with no need for manual intervention and no impact of a manual subjective factor. This helps improve efficiency of mining hard example data and accuracy of the mined hard example data.

It may be understood that, in some other embodiments, alternatively, the vehicle 100 may not perform step S701 to step S705, and another electronic device implements step S701 to step S705 based on radar detection data collected by the radar 126 of the vehicle 100 and visual detection data collected by the camera 130. This is not limited herein.

The following describes a technical solution in which the vehicle 100 determines hard example data based on a first degree of matching between a radar detection result at a first moment and a radar detection result at a second moment and a second degree of matching between the radar detection result at the first moment and a visual detection result at the first moment.

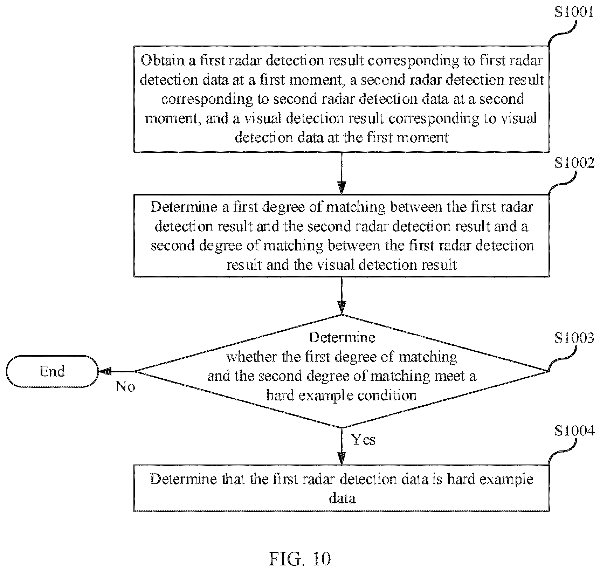

Specifically, FIG. 10 is a schematic flowchart of still another data processing method according to some embodiments of this application. The procedure may be performed by any computing unit in the vehicle 100, for example, the processor 113. As shown in FIG. 10, the procedure includes the following steps.

S1001: Obtain a first radar detection result corresponding to first radar detection data at a first moment, a second radar detection result corresponding to second radar detection data at a second moment, and a visual detection result corresponding to visual detection data at the first moment.

In a traveling process, the vehicle 100 may respectively obtain, at the first moment and the second moment, the first radar detection data and the second radar detection data that are detected by the radar 126, and obtain, at the first moment, the visual detection data detected by the camera 130. Then, the first radar detection data and the second radar detection data are separately input to a radar detection model, and inference is performed by using the radar detection model, to obtain the first radar detection result corresponding to obstacle information of an environment in which the vehicle 100 is located at the first moment and the second radar detection result corresponding to obstacle information of an environment in which the vehicle 100 is located at the second moment; and the visual detection data is input to a visual detection model, and inference is performed by using the visual detection model, to obtain the visual detection result corresponding to the obstacle information of the environment in which the vehicle 100 is located at the first moment.

It may be understood that, in some other embodiments, the visual detection result may alternatively be obtained in another manner, instead of being determined by inputting the visual detection data to the visual detection model. This is not limited herein.

S1002: Determine a first degree of matching between the first radar detection result and the second radar detection result and a second degree of matching between the first radar detection result and the visual detection result.

The vehicle 100 determines the first degree of matching between the first radar detection result and the second radar detection result and the second degree of matching between the first radar detection result and the visual detection result. For a manner of determining the first degree of matching between the first radar detection result and the second radar detection result, refer to step S402 and step S403. For a manner of determining the second degree of matching between the first radar detection result and the visual detection result, refer to step S702 and step S703. Details are not described herein again.

S1003: Determine whether the first degree of matching and the second degree of matching meet a hard example condition.

After determining the first degree of matching and the second degree of matching, the vehicle 100 determines whether the first degree of matching and the second degree of matching meet the hard example condition. If it is determined that the first degree of matching and the second degree of matching meet the hard example condition, it indicates that the first radar detection data is hard example data, and step S1004 is performed; otherwise, determining on the first radar detection data is ended.

In some embodiments, the hard example condition may include at least one of the following conditions:

a weighted sum of the first degree of matching and the second degree of matching is less than a preset weighted degree of matching;
a maximum value of the first degree of matching and the second degree of matching is less than a preset maximum degree of matching; or
an average value of the first degree of matching and the second degree of matching is less than a preset average degree of matching.

It may be understood that, in some other embodiments, the hard example condition may further include another condition. This is not limited herein.

S1004: Determine that the first radar detection data is hard example data.

When determining that the second degree of matching meets the hard example condition, the vehicle 100 determines that the first radar detection data is the hard example data corresponding to the radar detection model.

It may be understood that, in some embodiments, after it is determined that the first radar detection data is the hard example data corresponding to the radar detection model, an obstacle in the first radar detection data may be manually marked, and marked data is added to a training set of the radar detection model, to perform iterative training on the radar detection model, to improve accuracy of a radar detection result obtained by the vehicle 100 performing inference by using the radar detection model.

According to the foregoing method, hard example data for the radar detection model is determined based on a second degree of matching between a radar detection result corresponding to radar detection data at a first moment and a visual detection result corresponding to visual detection data at the moment and a first degree of matching between radar detection results corresponding to the first moment and a second moment, with no need for manual intervention and no impact of a manual subjective factor. This helps improve efficiency of mining hard example data and accuracy of the mined hard example data.

It may be understood that, in some other embodiments, alternatively, the vehicle 100 may not perform step S1001 to step S1004, and another electronic device implements step S1001 to step S1004 based on radar detection data collected by the radar 126 of the vehicle 100 and visual detection data collected by the camera 130. This is not limited herein.

In the foregoing embodiments, determining of hard example data for the radar detection model is merely an example. In some other embodiments, hard example data for the visual detection model or another model may also be determined by using a similar method. Further, based on the embodiments shown in FIG. 3 to FIG. 10, an embodiment of this application further provides yet another data processing method.

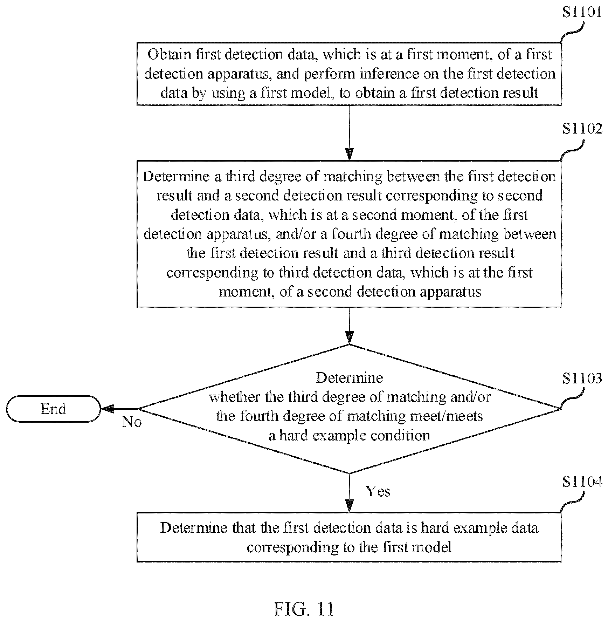

Specifically, FIG. 11 is a schematic flowchart of yet another data processing method according to some embodiments of this application. The procedure may be performed by any electronic device, for example, the vehicle 100. As shown in FIG. 11, the data processing method includes the following steps.

S1101: Obtain first detection data, which is at a first moment, of a first detection apparatus, and perform inference on the first detection data by using a first model, to obtain a first detection result.

The vehicle 100 may obtain the first detection data, which is at the first moment, of the first detection apparatus, input the first detection data to the first model, and perform inference on the first detection data by using the first model, to obtain the first detection result corresponding to the first detection data of the vehicle 100.

It may be understood that the first model may be any model that performs inference by using the first detection data, for example, the foregoing visual detection model or radar detection model. This is not limited herein.

It may be understood that, in some embodiments, the first detection apparatus may be any detection apparatus, in the vehicle 100, that may be configured to identify an obstacle in an environment in which the vehicle 100 is located, including but not limited to a radar, a camera, an ultrasonic sensor, a laser rangefinder, or the like.

For example, when the first detection apparatus is the radar 126 of the vehicle 100, the first detection data may be radar detection data detected by the radar 126 at the first moment, the first model may be the foregoing radar detection model, and the first detection result may be the foregoing first radar detection result.

For example, when the first detection apparatus is the camera 130 of the vehicle 100, the first detection data may be visual detection data detected by the camera 130 at the first moment, the first model may be the foregoing visual detection model, and the first detection result may be a visual detection result obtained by performing, by using the visual detection model, inference on the visual detection data detected by the camera 130 at the first moment.

S1102: Determine a third degree of matching between the first detection result and a second detection result corresponding to second detection data, which is at a second moment, of the first detection apparatus, and/or a fourth degree of matching between the first detection result and a third detection result corresponding to third detection data, which is at the first moment, of a second detection apparatus.

The vehicle 100 determines the third degree of matching between the first detection result and the second detection result corresponding to the second detection data, which is at the second moment, of the first detection apparatus, and/or the fourth degree of matching between the first detection result and the third detection result corresponding to the third detection data, which is at the first moment, of the second detection apparatus.

It may be understood that the second detection apparatus is a detection apparatus different from the first detection apparatus, and the third detection result is a result obtained based on the third detection data in a manner other than the first model and representing the same content as that represented by the first detection result. For example, both the first detection result and the third detection result are results representing obstacle information of an environment in which the vehicle 100 is located.

For example, when the first detection apparatus is the radar 126 of the vehicle 100, the second detection result may be the foregoing second radar detection result, and the third degree of matching may be a degree of matching between the first radar detection result and the second radar detection result, namely, the foregoing first degree of matching. If the second detection apparatus is the camera 130, the third detection result may be the foregoing visual detection result, and the fourth degree of matching may be the foregoing second degree of matching. Further, for a manner of determining the third degree of matching and the fourth degree of matching, refer to step S403 and step S703. Details are not described herein again.

For example, when the first detection apparatus is the camera 130 of the vehicle 100, the second detection result may be a visual detection result obtained by inputting, to the visual detection model, visual data (the second detection data) detected by the camera 130 at the second moment. Therefore, the third degree of matching may be determined based on a degree of difference between point cloud distribution corresponding to an obstacle in the first detection result and point cloud distribution corresponding to an obstacle in the second detection result. If the second detection apparatus is the radar 126, the third detection result may be a radar detection result of a radar by inputting the third detection data (radar data detected by the radar 126 at the first moment) to the radar detection model. Further, for a manner of determining the fourth degree of matching, refer to the foregoing manner of determining the second degree of matching. Details are not described herein again.

S1103: Determine whether the third degree of matching and/or the fourth degree of matching meet/meets a hard example condition.

After determining the third degree of matching and/or the fourth degree of matching, the vehicle 100 determines whether the third degree of matching and/or the fourth degree of matching meet/meets the hard example condition. If it is determined that the hard example condition is met, it indicates that the first detection data is hard example data for the first model, and step S1104 is performed; otherwise, determining on the first detection data is ended.

It may be understood that, in some embodiments, the hard example condition may include at least one of the following conditions:

the third degree of matching is less than a third preset degree of matching;
the fourth degree of matching is less than a fourth preset degree of matching;
a weighted sum of the third degree of matching and the fourth degree of matching is less than a preset weighted degree of matching;
a maximum value of the third degree of matching and the fourth degree of matching is less than a preset maximum degree of matching; or
an average value of the third degree of matching and the fourth degree of matching is less than a preset average degree of matching.

S1104: Determine that the first detection data is hard example data corresponding to the first model.

When determining that the hard example condition is met, the vehicle 100 determines that the first detection data is the hard example data for the first model.

It may be understood that, in some embodiments, after it is determined that the first detection data is the hard example data for the first model, an obstacle in the first detection data may be manually marked, and marked data is added to a training set of the first model, to perform iterative training on the first model, to improve accuracy of an obstacle detection result obtained by the vehicle 100 performing inference by using the first model.

According to the foregoing method, hard example data for the first model is determined based on a fourth degree of matching between a first detection result corresponding to first detection data at a first moment and a third detection result corresponding to third detection data, which is at the moment, of a second detection apparatus, and/or a third degree of matching between the first detection result corresponding to the first moment and a second detection result corresponding to a second moment, with no need for manual intervention and no impact of a manual subjective factor. This helps improve efficiency of mining hard example data and accuracy of the mined hard example data.

It may be understood that, in some other embodiments, alternatively, the vehicle 100 may not perform step S1101 to step S1104, and another electronic device implements step S1101 to step S1104. This is not limited herein.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be used for inputting instructions, to perform functions described in this application and generate output information. The output information may be applied to one or more output devices in a known manner. For a purpose of this application, a processing system includes any system having a processor like a digital signal processor (DSP), a microcontroller, an application-specific integrated circuit (ASIC), or a microprocessor.

The program code may be implemented by using a high-level programming language or an object-oriented programming language, to communicate with the processing system. The program code may alternatively be implemented by using an assembly language or a machine language when required. The mechanism described in this application is not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions carried by or stored in one or more temporary or non-temporary machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine (for example, computer)-readable form, including but not limited to a floppy disk, a compact disc, an optical disc, a compact disc read-only memory (CD-ROM), a magnetic optical disc, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory configured to transmit information (for example, a carrier, an infrared signal, or a digital signal) by using a propagating signal in an electrical, optical, acoustic, or another form through the Internet. Therefore, the machine-readable medium includes any type of machine-readable medium suitable for storing or transmitting an electronic instruction or information in a machine (for example, computer)-readable form.

In the accompanying drawings, some structural or method features may be shown in a particular arrangement and/or sequence. However, it should be understood that such a particular arrangement and/or sequence may not be required. In some embodiments, these features may be arranged in a manner and/or sequence different from those/that shown in the descriptive accompanying drawings. In addition, inclusion of the structural or method features in a particular figure does not imply that such features are required in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem raised in this application. In addition, to highlight an innovative part of this application, a unit/module that is not closely related to resolution of the technical problem raised in this application is not introduced in the foregoing device embodiments of this application. This does not mean that there are no other units/modules in the foregoing device embodiments.

It should be noted that, in examples and the specification of this patent, relational terms such as first and second are merely used to distinguish between one entity or operation and another entity or operation, and do not necessarily require or imply that any actual relationship or sequence exists between these entities or operations. In addition, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element defined by "include a/an" does not exclude other same elements existing in a process, a method, an article, or a device which includes the element.

Although this application has been illustrated and described with reference to some preferred embodiments of this application, a person of ordinary skill in the art should understand that various changes may be made to this application in form and detail without departing from the spirit and scope of this application.

**Claims**

1. A data processing method, comprising:

    inputting, to a first model, first detection data collected by a vehicle at a first moment by using a first detection apparatus, to obtain a first obstacle detection result of the vehicle; and
    matching the first obstacle detection result with a second obstacle detection result, and determining, based on a result of the matching, whether the first detection data is hard example data for the first model, wherein when the first detection data is the hard example data for the first model, it indicates that accuracy of the first obstacle detection result does not meet a preset requirement.

2. The method according to claim 1, wherein the second obstacle detection result comprises a third obstacle detection result generated by the first model based on second detection data collected by the first detection apparatus at a second moment, and/or a fourth obstacle detection result generated based on third detection data collected by a second detection apparatus at a third moment.

3. The method according to claim 2, wherein determining, based on the result of the matching, whether the first detection data is the hard example data for the first model comprises:
    when a first degree of matching between the first obstacle detection result and the third obstacle detection result and/or a second degree of matching between the first obstacle detection result and the fourth obstacle detection result meet/meets a hard example condition, determining that the first detection data is the hard example data for the first model.

4. The method according to claim 3, wherein the hard example condition comprises at least one of the following conditions:

    at least one first degree of matching is less than a first preset degree of matching;
    at least one second degree of matching is less than a second preset degree of matching;
    a weighted sum of the first degree of matching and the second degree of matching is less than a preset weighted degree of matching;
    a maximum value of the first degree of matching and the second degree of matching is less than a preset maximum degree of matching; or
    an average value of the first degree of matching and the second degree of matching is less than a preset average degree of matching.

5. The method according to claim 3 or 4, wherein the first degree of matching is determined based on obstacle information, located in a comparison area, in the first obstacle detection result and obstacle information, located in the comparison area, in the third obstacle detection result; and the second degree of matching is determined based on the obstacle information, located in the comparison area, in the first obstacle detection result and obstacle information, located in the comparison area, in the fourth obstacle detection result.

6. The method according to claim 5, wherein the first obstacle detection result comprises three-dimensional contour information of N obstacles, the third obstacle detection result comprises three-dimensional contour information of M objects, and the fourth obstacle detection result comprises two-dimensional contour information of P obstacles.

7. The method according to claim 6, wherein the first degree of matching is determined based on a degree of matching between three-dimensional contour information of an obstacle, located in the comparison area, in the N obstacles and three-dimensional contour information of an obstacle, located in the comparison area, in the M obstacles; and the second degree of matching is determined based on a degree of difference between a projection of the three-dimensional contour information of the obstacle, located in the comparison area, in the N obstacles onto a plane on which the fourth obstacle detection result is located and two-dimensional contour information of an obstacle, located in the comparison area, in the P obstacles.

8. The method according to claim 7, wherein the comparison area comprises an area, formed by a boundary point on a polar axis of each polar angle in a polar coordinate system that uses a coordinate center as a pole, in a top view of the three-dimensional contour information of the N obstacles, and the coordinate center comprises one of a center of the vehicle, a center of gravity of the vehicle, or a coordinate center of the first detection apparatus, wherein the boundary point is determined in the following manner:

when there is a point of intersection between a polar axis of a first polar angle and a static obstacle in the N obstacles, using the point of intersection as a boundary point on the polar axis of the first polar angle, wherein the first polar angle is any polar angle in the polar coordinate system; or

when there is no point of intersection between a polar axis of a first polar angle and a static obstacle in the N obstacles, using a point of intersection between the polar axis of the first polar angle and a road surface edge or a point of intersection between the polar axis of the first polar angle and a boundary of the top view as a boundary point on the polar axis of the first polar angle.

9. The method according to claim 2, wherein an interval between the first moment and the second moment is less than first preset duration, and an interval between the first moment and the third moment is less than second preset duration.

10. The method according to claim 2, wherein the first detection apparatus comprises a radar of the vehicle, the second detection apparatus comprises a camera of the vehicle, and the first model is a radar detection model.

11. A readable storage medium, wherein the readable storage medium stores instructions, and when the instructions are executed by an electronic device, the electronic device is enabled to implement the data processing method according to any one of claims 1 to 10.

12. An electronic device, comprising:

a memory, configured to store instructions; and
at least one processor, configured to execute the instructions, to enable the electronic device to implement the data processing method according to any one of claims 1 to 10.

FIG. 1

FIG. 2

**Vehicle 100**

**Travel system 102**

Engine 118

Energy source 119

Transmission apparatus 110

Wheel 211

**Sensing system 104**

Global positioning system 122

Inertial measurement unit 124

Radar 126

Laser rangefinder 128

Camera 130

**Control system 106**

Steering system 132

Throttle 134

Braking unit 136

Computer vision system 140

Route control system 142

Obstacle avoidance system 144

**Peripheral device 108**

Wireless communication system 146

Vehicle-mounted computer 148

Microphone 150

Speaker 152

**Computer system 112**

Processor 113

Data storage apparatus 114

Instructions 115

Power supply 110

User interface 116

FIG. 3

S401

Perform inference on first radar detection data at a first moment and second radar detection data at a second moment by using a radar detection model, to obtain a first radar detection result corresponding to the first radar detection data and a second radar detection result corresponding to the second radar detection data

S402

Determine a comparison area based on the first radar detection result

S403

Determine a first degree of matching between the first radar detection result and the second radar detection result

S404

Determine whether the first degree of matching meets a hard example condition

No → End

Yes

S405

Determine that the first radar detection data is hard example data

FIG. 4

S1     R1     D1     D2     D3

100

100

FIG. 5A

S1-1     R1-1          D1-1  D2-1          D3-1

Z
Y
X

FIG. 5B

S1-2  R1-2  D1-2  D2-2  D3-2

FIG. 5C

FIG. 6

S701

Perform inference on first radar detection data at a first moment and visual detection data at the first moment by using a radar detection model and a visual detection model respectively, to obtain a first radar detection result corresponding to the first radar detection data and a visual detection result corresponding to the visual detection data

S702

Determine a comparison area based on the first radar detection result

S703

Determine a second degree of matching between the first radar detection result and the visual detection result

S704

Determine whether the second degree of matching meets a hard example condition

End ← No

Yes

S705

Determine that the first radar detection data is hard example data

FIG. 7

FIG. 8

DS-1 PC-1

DS-1 PC-2

Quantity: 32

FIG. 9

S1001

Obtain a first radar detection result corresponding to first radar detection data at a first moment, a second radar detection result corresponding to second radar detection data at a second moment, and a visual detection result corresponding to visual detection data at the first moment

S1002

Determine a first degree of matching between the first radar detection result and the second radar detection result and a second degree of matching between the first radar detection result and the visual detection result

S1003

Determine whether the first degree of matching and the second degree of matching meet a hard example condition

End

No

Yes

S1004

Determine that the first radar detection data is hard example data

FIG. 10

S1101

Obtain first detection data, which is at a first moment, of a first detection apparatus, and perform inference on the first detection data by using a first model, to obtain a first detection result

S1102

Determine a third degree of matching between the first detection result and a second detection result corresponding to second detection data, which is at a second moment, of the first detection apparatus, and/or a fourth degree of matching between the first detection result and a third detection result corresponding to third detection data, which is at the first moment, of a second detection apparatus

S1103

Determine whether the third degree of matching and/or the fourth degree of matching meet/meets a hard example condition

End

No

Yes

S1104

Determine that the first detection data is hard example data corresponding to the first model

FIG. 11

## INTERNATIONAL SEARCH REPORT

| International application No. |
|---|
| **PCT/CN2023/118038** |

| **A.** | **CLASSIFICATION OF SUBJECT MATTER** |
|---|---|

G01S17/931(2020.01)i

According to International Patent Classification (IPC) or to both national classification and IPC

| **B.** | **FIELDS SEARCHED** |
|---|---|

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNABS; CNTXT; CNKI; ENTXTC; ENTXT; VEN: 华为, 车, 超声波, 雷达, 微波, 视频, 摄像, 图像, 相机, 路障, 行人, 障碍物, car, vehicle, radar, lidar, camera, photography, image, obstacle

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 114299030 A (CHINA CONSTRUCTION BANK CORP.) 08 April 2022 (2022-04-08) description, paragraphs [0038]-[0208] | 1-4, 11, 12 |
| A | CN 114418021 A (TENCENT TECHNOLOGY (SHENZHEN) CO., LTD.) 29 April 2022 (2022-04-29) entire document | 1-12 |
| A | CN 115359301 A (SHANGHAI XUNXU ARTIFICIAL INTELLIGENCE TECHNOLOGY CO., LTD.) 18 November 2022 (2022-11-18) entire document | 1-12 |
| A | CN 115205311 A (XIAOMI AUTOMOBILE TECHNOLOGY CO., LTD.) 18 October 2022 (2022-10-18) entire document | 1-12 |
| A | CN 112733666 A (HUBEI ECARX TECHNOLOGY CO., LTD.) 30 April 2021 (2021-04-30) entire document | 1-12 |
| A | CN 113762406 A (NEUSOFT REACH AUTOMOTIVE TECHNOLOGY (SHENYANG) CO., LTD) 07 December 2021 (2021-12-07) entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 October 2023** | **09 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118038**

| Patent document cited in search report | | | Publication date (day/month/year) | Patent family member(s) | Publication date (day/month/year) |
|---|---|---|---|---|---|
| CN | 114299030 | A | 08 April 2022 | None | |
| CN | 114418021 | A | 29 April 2022 | None | |
| CN | 115359301 | A | 18 November 2022 | None | |
| CN | 115205311 | A | 18 October 2022 | None | |
| CN | 112733666 | A | 30 April 2021 | None | |
| CN | 113762406 | A | 07 December 2021 | None | |

Form PCT/ISA/210 (patent family annex) (July 2022)

**REFERENCES CITED IN THE DESCRIPTION**

**Patent documents cited in the description**

- CN 202310183088